# EUROPEAN PATENT SPECIFICATION

(11) **EP 0 770 803 B1**
(45) Date of publication and mention of the grant of the patent: **27.03.2002**
(21) Application number: 96850177.5
(22) Date of filing: 24.10.1996
(51) Int. Cl.: F16J 15/08, F16J 15/12

(54) **A gasket**
Eine Flachdichtung
Un joint flat

(30) Priority: 26.10.1995 SE 9503809
(43) Date of publication of application: 02.05.1997
(73) Proprietor: Trelleborg Rubore Aktiebolag, 391 28 Kalmar (SE)
(72) Inventor: Josefsson, Percy, 388 00 Ljungbyholm (SE)
(74) Representative: Lundin, Björn-Eric

(56) References cited:
- WO-A-91/13758
- DE-A- 3 802 090
- GB-A- 2 019 507

## Description

The present invention relates to a gasket, and more specifically to a cylinder head gasket for internal combustion engines of the kind that comprises a laminate which consists of a thin stainless steel plate or a heat-resistant steel plate that is coated on each side with still thinner carrier-calendared rubber film which has a thickness of at least 0.05 mm and which is affixed to the steel plate by vulcanization, said gasket being provided with openings for accommodating the cylinder heads.

Present-day cylinder head gaskets consist of a pack of several thin metal plates which are often rivetted together. The pack may contain from three to six plates, which may be coated with an extremely thin layer of paint, rubber or some other polymer applied in the form of a solution or dispersion.

For instance, there is proposed in FR-A5-2184133 a cylinder head gasket which comprises a metal band that has been coated with a layer of rubber on each side thereof. The rubber layer has been applied in the form of a solution and then heated to bind the rubber layer. Prior publications DE-C2-3500071 and JP-A-62/101873 also teach gaskets of this kind produced on the basis of different types of rubber solutions. US-A-5,110,630 describes the manufacture of a metal-rubber gasket in which a thin steel band is treated with chromate and rubber adhesive in sequence in a continuous process followed by a heat-treatment process, whereafter a rubber layer is applied. This is said to be effected by applying an adhesive layer of desired thickness. The laminate will thus have an adhesive layer between each rubber layer and the metal surface.

Present-day gaskets cause problems in many cases, especially when used with engines in which the cylinder heads and engine blocks are comprised of dissimilar materials, as is becoming more and more usual. For instance, it is becoming more usual to manufacture the cylinder head from an aluminium alloy and the engine block from cast iron. As a result of the different thermal properties of these materials, transverse movements occur between cylinder head and motor block while the engine is running.

This increases the need for the gaskets to be able to withstand the shear forces to which they are subjected as a result of these thermally induced transverse movements. Hitherto, one solution has been to increase the number of metal layers in the gasket. However, there are reasons why this solution cannot be considered to be the ultimate solution. Firstly, more complicated gaskets become more expensive, of course, since they both greatly increase material and manufacturing costs. A second reason is one of an environmental nature. The thicker the gasket, the more liable it is that pockets will be formed that can create higher concentrations of non-combusted hydrocarbons in the exhaust gases, a consequence which is extremely problematic in view of present-day environmental requirements.

An ideal gasket material for modern internal combustion engines shall thus exhibit good properties with regard to compressibility and its ability to absorb shear forces while, at the same time, being thin and easy to produce cheaply, besides having an effective blow-by resistance, which is particularly important in the present context, i.e. the gasket shall provide the best possible seal under the difficult conditions that prevail in respect of a cylinder head gasket.

A gasket of the kind defined in the introduction has been proposed in our earlier Patent Application SE-A-9401401-6 and in our corresponding International Patent Application WO 95/29333 which are herewith incorporated in this document by reference. This gasket has the unique features of being highly compressible, having good shear-force absorbing properties and blow-by resistance (sealing ability). It is thus important that the rubber coatings will have the specific properties and the specific structure that are exhibited by calendared rubber films, among other things homogeneity and uniformity with regard to both physical properties and dimensions, and shall be as pore-free as possible. These properties cannot be achieved with a rubber covering that has been applied in the form of a solution or in the form of a dough that has been rolled-out directly on the plate surface, since rubber coatings or coverings formed in this way will always include dough-forming residues or solvent residues that result in the formation of pores and other inhomogeneities and thereby give rise to weakened zones and possibly also to adhesive layers. It is also important that the rubber films have been applied to the plate with the aid of a calendaring carrier or vehicle which will ensure highly effective and primarily flat abutment with the surface of the plate in the absence of any tendency towards unevenness in the abutment surfaces, and which will also allow the outer surface to be given a structure that is commensurate with the carrier or vehicle chosen.

The surface structure that is obtained when calendaring or vulcanizing a textile carrier, for instance a so-called linen structure, has been found especially beneficial. It has surprisingly been found that the essentially rough or "pimpled" outer surface provides improved abutment and sealing against metal surfaces. This enables mechanically strong rubber-plate bonds to be achieved by vulcanization without encountering problems.

However, it may be difficult to find a rubber quality that is suitable for the laminate, particularly since the heat generated by high compression engines can be of such high magnitude as to destroy the rubber film much too quickly. The drawback with the use of a rubber quality that has a higher heat-resistance is that those parts of the gasket that are subjected to the most movement will wear to a greater extent than the remainder of the gasket. It is thus necessary with this type of gasket to find a suitable compromise between heat-resistance and abrasion-resistance with regard to the rubber film.

An object of the present invention is to provide a gasket which has all the good properties of our earlier gasket but which eliminates the afore-indicated problems with regard to the choice of rubber quality for certain applications in which particularly high temperatures (heat) are generated around the cylinder heads.

The inventive gasket is characterized to this end by the features set forth in the following Claims. Thus, in an area around each cylinder head opening and possibly also between these openings the gasket includes a laminate which comprises a plate core that has a film of rubber of high heat resistance vulcanized to each side thereof. The plate may optionally in the area around the cylinder head openings be separate from the remainder of the plate. The rubber films in the laminate in remaining areas or regions of the gasket are comprised of carrier calendared more wear-resistant rubber in the following "wear-resistant rubber". The more heat-resistant in the following "heat-resistant rubber", rubber is preferably also carrier calendared. The heat-resistant rubber is preferably fluorine rubber and the wear-resistant rubber nitrile rubber. Although the heat-resistant film may have any appropriate shape, a circular shape is preferred.

In order to obtain a higher gasket pressure around the cylinders, the heat-resistant film may be thicker than the wear-resistant film, a suitable thickness being about 0.15 mm when the wear-resistant film has a thickness of 0.08 mm, earlier experiences having shown that this thickness is most suitable for the carrier calendared rubber film. One suitable alternative is to increase the plate thickness for the heat-resistant film by 0.07 mm, for instance, and to give the heat-resistant film the same thickness as the wear-resistant film, e.g. 0.08 mm.

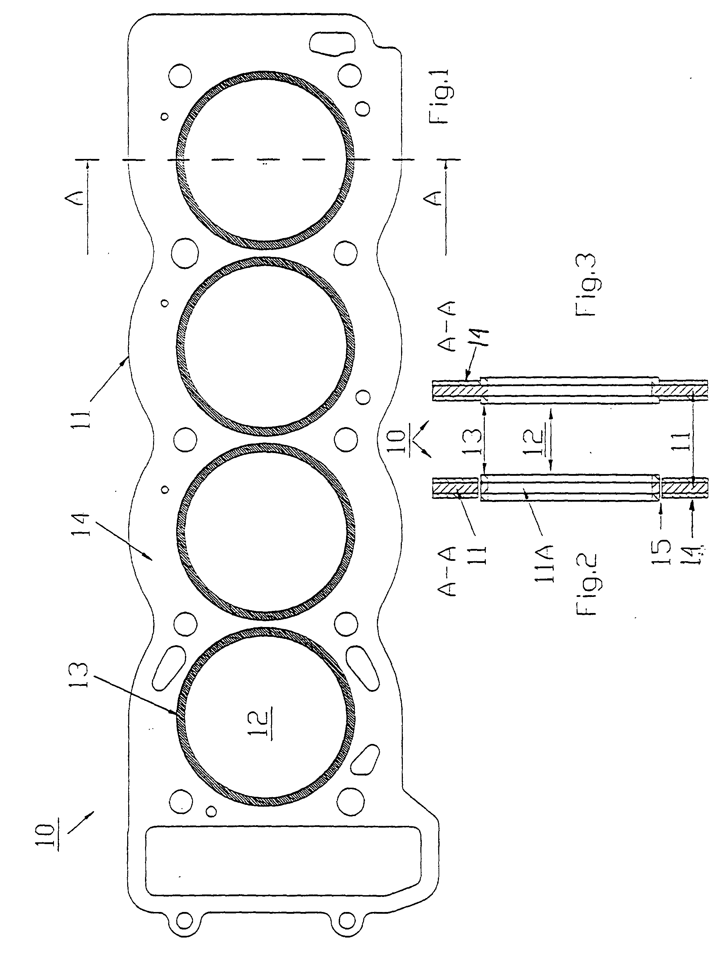

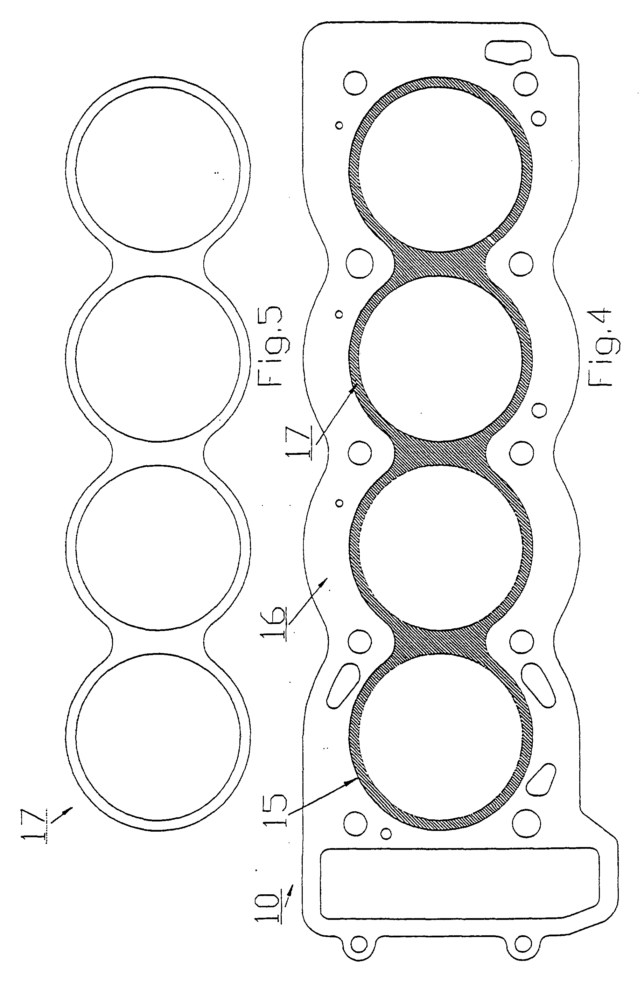

The invention will now be described in more detail with reference to the accompanying drawing, in which Figure 1 is a vertical view of an inventive gasket; Figures 2 and 3 are enlarged views of parts of the gasket shown in Figure 1; Figure 4 illustrates another embodiment of an inventive gasket; and Figure 5 illustrates an inner gasket associated with this latter embodiment, both of which are seen vertically.

Shown in Figure 1 is a cylinder head gasket comprising a plate 11 having four cylinder head accommodating openings 12. An annulus 13 of heat-resistant rubber is provided around each opening 12. Remaining parts of the plate 11 are covered with a wear-resistant rubber film 14. The plate 11 beneath the annulus 13 may be separate and thus delimited from the remainder of the plate 11.

Figure 2 is an enlarged sectional side view taken on the line A-A in Figure 1 and shows a part of a preferred embodiment of a gasket 10. The plate 11 is covered on both sides with a wear-resistant rubber film 14 that has been vulcanized on the plate 11. The plate 11A in the area around the cylinder head opening 12 is separate from the remainder of the plate 11 and is delimited therefrom by a narrow gap 15. An annulus 13 of heat-resistant rubber, e.g. fluorine rubber, is provided on both sides of the thus separated plate 11A around the cylinder head opening 12, said annuli 13 being vulcanized to the plate 11. The annuli 13 have a greater thickness than the rubber films 14, so as to obtain a higher gasket pressure in the region around the cylinders. The rubber coating 14 on remaining parts of the plate 11 is comprised of a rubber that has a greater resistance to wear than the rubber in the annuli 13, for instance nitrile rubber. The most pronounced movements occur in these outer regions of the gasket and it is there that the greatest wear problem exists.

Figure 3 is a sectional view similar to the view of Figure 2 but showing a gasket 10 that includes one single continuous plate 11, which thus extends up to the hole 12 beneath the rubber annulus 13 as seen in the Figure. The plate 11 is coated with a wear-resistant rubber layer 14 with the exception of the region of an annulus around respective holes 12, where the coating or covering is comprised of a heat-resistant rubber layer which thus forms the earlier mentioned rubber annulus 13.

Figure 4 illustrates a gasket 10 which consists of two parts, namely an outer part 16 produced from a laminate coated with wear-resistant rubber, and an inner part 17 produced from a laminate coated with heat-durable rubber. Both of the laminates have carrier calendared rubber films that have been vulcanized on the intermediate plate.

Figure 5 illustrates the inner gasket part 17 of the gasket 10 shown in Figure 4.

The inventive gaskets are suitably manufactured by first producing a laminate strip or band which has a layer of wear-resistant rubber on both sides thereof, wherein the rubber layers are vulcanized onto the plate with the aid of a carrier and a band-vulcanizing machine as described in one of our earlier patent specifications, for instance Publication EP-A-594601 (WO 91/13758).

With regard to the embodiment in which the gasket is divided, as illustrated in Figures 2, 4 and 5, a second band laminate is produced in an analogous manner, but with a heat-resistant rubber. Outer gasket parts 16 are then punched from the first laminated band comprising wear-resistant rubber coatings, and inner gasket parts are punched from the other band laminate. These latter gasket parts have been produced as separate gaskets, e.g. ring-shaped gaskets, although it is preferred from the various aspects of manufacture and assembly to produce these gaskets as a single, continuous inner gasket 17. To facilitate handling of the inner gasket 17 up to the point of its assembly, the inner gasket 17 can be secured to the outer gasket 16 in some suitable manner as early as the manufacturing stage. For instance, the inner gasket can be fastened to the outer gasket 16 by applying a few drops of adhesive in the gap 15 that delimits the inner gasket 17 from the outer gasket 16.

With regard to the manufacture of the second embodiment of the inventive gasket, as illustrated in Figures 1 and 3, the rubber layer on the band laminate is removed around circular regions corresponding to the holes 12 and the annuli 13. This can be effected chemically or mechanically, for instance by water-jet blasting. A heat-resistant rubber layer is then placed in these regions in which the plate has been cleaned from the original rubber. The easiest way of applying this coating is to spray rubber solution in a known manner, although pre-punched, non-vulcanized rubber film may also be used.

The new coating is then bonded to the plate by applying heat. Finished gaskets are then finally punched from the band laminate. In this latter case, only the wear-resistant rubber layer has been carrier-calendared, although this is compensated for to some extent by virtue of the plate being continuous and consequently this embodiment may be preferred in certain cases.

## Claims

1. A cylinder head gasket (10) for internal combustion engines which comprises a laminate that consists of a thin stainless and/or heat-resistant steel plate (11, 11A, 16, 17) that is coated on each side with still thinner rubber film (13,14) having a thickness of at least 0.05 mm and affixed to the steel plate by vulcanization, said gasket including cylinder head openings (12), **characterized in that** a part (11A, 17) of the steel plate (11, 11A, 16, 17) in the area around the cylinder head openings (12) optionally is separate from the remainder of the plate, that the rubber film (13) in the region of said openings (12) and optionally therebetween is comprised of a more heat-resistant rubber than in the remaining regions; and **in that** the rubber film (14) in remaining regions of the laminate is comprised of a carrier-calendared more wear-resistant rubber than in the region of said openings (12).

2. A gasket according to Claim 1, **characterized in that** the more heat-resistant rubber film (13) is carrier-calendared.

3. A gasket according to Claim 1 and Claim 2, **characterized in that** the more heat-resistant rubber film (13) is fluorine rubber.

4. A gasket according to Claims 1-3, **characterized in that** the more wear-resistant rubber film (14) is nitrile rubber.

5. A gasket according to Claims 14, **characterized in that** the more heat-resistant rubber film (13) is thicker than the more wear-resistant film (14).

6. A gasket according to Claim 5, **characterized in that** the more heat-resistant rubber film (13) has a thickness of about 0.15 mm.

## Patentansprüche

1. Zylinderkopfdichtung (10) für Verbrennungskraftmaschinen, welche ein Schichtmaterial umfaßt, das aus einer dünnen Edelstahl- und/oder hitzebeständigen Stahlplatte (11, 11A, 16, 17) besteht, welche auf jeder Seite mit einer noch dünneren Gummischicht (13, 14) beschichtet ist, die eine Dicke von wenigstens 0,05 mm aufweist und an der Stahlplatte durch Vulkanisierung befestigt ist, wobei die Dichtung Zylinderkopföffnungen (12) aufweist, **dadurch gekennzeichnet, daß** ein Teil (11A, 17) der Stahlplatte (11, 11A, 16, 17) in dem Bereich um die Zylinderkopföffnungen (12) optional von dem Rest der Platte getrennt ist, daß die Gummischicht (13) in dem Bereich der Öffnungen (12) und optional dazwischen aus einem hitzebeständigeren Gummi besteht als in den übrigen Bereichen und daß die Gummischicht (14) in den übrigen Bereichen des Schichtmaterials aus einem trägerkalandrierten, verschleißfesteren Gummi besteht als in dem Bereich der Öffnungen (12).

2. Dichtung nach Anspruch 1, **dadurch gekennzeichnet, daß** die hitzebeständigere Gummischicht (13) trägerkalandriert ist.

3. Dichtung nach Anspruch 1 oder Anspruch 2, **dadurch gekennzeichnet, daß** die hitzebeständigere Gummischicht (13) Fluorkautschuk ist.

4. Dichtung nach einem der Ansprüche 1 bis 3, **dadurch gekennzeichnet, daß** die verschleißfestere Gummischicht (14) Nitrilkautschuk ist.

5. Dichtung nach einem der Ansprüche 1 bis 4, **dadurch gekennzeichnet, daß** die hitzebeständigere Gummischicht (13) dicker ist als die verschleißfestere Schicht (14).

6. Dichtung nach Anspruch 5, **dadurch gekennzeichnet, daß** die hitzebeständigere Gummischicht (13) eine Dicke von etwa 0,15 mm hat.

## Revendications

1. Joint flat de culasse (10) pour des moteurs à combustion interne comprenant un stratifié consistant en une plaque mince en acier inoxydable et/ou résistante à la chaleur (11, 11A, 16, 17), revêtue de chaque côté avec une couche fine continue en caoutchouc (13,14) ayant une épaisseur d'au moins 0,05 mm et connecté à la plaque en acier moyennant vulcanisation, ledit joint flat incluant des ouvertures pour la culasse (12), **caractérisé en ce qu'**une partie (11 A, 17) de la plaque en acier (11, 11A, 16, 17) dans la zone située autour des ouvertures pour la coulasse (12) est optionnellement séparée du reste de la plaque, **en ce que** la couche en caoutchouc (13) située près desdites ouvertures (12) et optionnellement entre celles-ci est constituée par un caoutchouc plus résistant à la chaleur que dans les régions restantes; et **en ce que** la couche en caoutchouc (14) située dans les régions restantes du stratifié est composée par un caoutchouc calandré plus résistant à l'usure que dans la région située en proximité desdites ouvertures (12).

2. Joint flat selon la revendication 1, **caractérisé en ce que** la couche en caoutchouc la plus résistante à la chaleur (13) est calandrée.

3. Joint flat selon la revendication 1 et la revendication 2, **caractérisé en ce que** la couche en caoutchouc la plus résistante à la chaleur (13) est du caoutchouc de fluor.

4. Joint flat selon les revendications 1-3, **caractérisé en ce que** la couche en caoutchouc la plus résistante à l'usure (14) est du caoutchouc de nitrile.

5. Joint flat selon les revendications 14, **caractérisé en ce que** la couche en caoutchouc la plus résistante à la chaleur (13) est plus épaisse que la couche la plus résistante à l'usure (14).

6. Joint flat selon la revendication 5, **caractérisé en ce que** la couche en caoutchouc la plus résistante à la chaleur (13) a une épaisseur d'environs 0,15 mm.
